# EUROPÄISCHE PATENTSCHRIFT

(11) **EP 1 628 858 B1**
(45) Veröffentlichungstag und Bekanntmachung des Hinweises auf die Patenterteilung: **27.12.2006**
(21) Anmeldenummer: 03776839.7
(22) Anmeldetag: 08.11.2003
(51) Int. Cl.: B60R 21/01

(54) **VERFAHREN UND VORRICHTUNG ZUM ENTSCHÄRFEN EINES PYROTECHNISCHEN AKTUATORS AUS EINEM KRAFTFAHRZEUG**
METHOD AND DEVICE FOR DEACTIVATING A PYROTECHNIC ACTUATOR IN A MOTOR VEHICLE
PROCEDE ET DISPOSITIF DE DESAMOR AGE D'UN ACTIONNEUR PYROTECHNIQUE SITUE DANS UN VEHICULE A MOTEUR

(30) Priorität: 04.06.2003 DE 10325494
(43) Veröffentlichungstag der Anmeldung: 01.03.2006
(73) Patentinhaber: Conti Temic microelectronic GmbH, 90411 Nürnberg (DE)
(72) Erfinder: GÖRNIG, Thomas, 85229 Markt Indersdorf (DE)
(86) Internationale Anmeldenummer: PCT/DE2003/003710
(87) Internationale Veröffentlichungsnummer: WO 2004/110820

(56) Entgegenhaltungen:
- EP-A- 0 919 782
- US-B1- 6 254 124
- US-B1- 6 293 583
- ANONYMOUS: "Technique for automotive air bag disposal" RESEARCH DISCLOSURE, KENNETH MASON PUBLICATIONS, HAMPSHIRE, GB, Bd. 406, Nr. 25, Februar 1998 (1998-02), XP007122374 ISSN: 0374-4353

## Beschreibung

Die Erfindung betrifft ein Verfahren zum Entschärfen eines pyrotechnischen Aktuators aus einem Kraftfahrzeug gemäss Anspruch 1 und eine entsprechende Vorrichtung gemäss Anspruch 14 sowie ein Airbagsystem nach Anspruch 15.

Die Oberbegriff diese Ansprüche ist beispiels weise aus der EP-A-0 919 782 bekannt.

Im Bereich der Automobiltechnik werden zunehmend Sicherheitseinrichtungen wie Airbag- und Gurtstraffersysteme eingesetzt, die pyrotechnische Aktuatoren enthalten. Derartige Aktuatoren sind bei unsachgemäßem Umgang sehr gefährlich, da sie explosiv sind, und müssen daher bei einer Verschrottung eines Kraftfahrzeugs gesondert entsorgt werden.

In der Regel werden dazu die Sicherheitseinrichtungen mit pyrotechnischen Aktuatoren aus einem zu verschrottenden Fahrzeug ausgebaut und über eine externe Vorrichtung gezündet, bevor eine weitere Demontage erfolgt. Der Vorgang des Zündens ist hierbei ein unkontrollierter und u.U. sehr gefährlicher Vorgang. Zudem ist der Ausbau zeit- und kostenintensiv, da er von Fachpersonal durchgeführt werden muss.

Im Falle eines Airbags ist eine Auslösung über das Airbag-Steuergerät in der Regel nicht möglich, da die Sicherheitsstrategien, die auf einem Safing- oder Trigger-Sensor beruhen, eine Zündung ohne ein externes Beschleunigungssignal nicht zulassen.

Die EP 0995646 B1 offenbart ein Entschärfungsverfahren für pyrotechnische Aktuatoren in einem Fahrzeug, bei dem ein Kodesignal zum Auslösen der Aktuatoren von außen eingegeben werden kann, beispielsweise über eine Diagnose- oder Busschnittstelle. Bei Übereinstimmung des eingegebenen Kodesignals mit einem im Fahrzeug gespeicherten Kodesignal werden Aktuatoren gemeinsam ausgelöst. Die Kenntnis des Kodesignals reicht hierbei zum Auslösen aus. Es wird zwar vorgeschlagen, die Sicherheit weiter durch eine elektromechanische Manipulation des Bordnetzes des Fahrzeugs zur Vorbereitung des Auslösevorgangs zu erhöhen, beispielsweise durch Anlegen eines Hardwaresignals an einen Sensoranschluss. Allerdings sind auch in diesem Fall lediglich die Kenntnis des Kodesignals und die Manipulation am Bordnetz zum Auslösen erforderlich.

Aufgabe der vorliegenden Erfindung ist es nun, ein Verfahren und eine Vorrichtung zum Entschärfen eines pyrotechnischen Aktuators aus einem Kraftfahrzeug vorzuschlagen, welche die Sicherheit vor unbefugtem Auslösen des Aktuators weiter erhöhen.

Diese Aufgabe wird durch ein Verfahren und eine Vorrichtung zum Entschärfen eines pyrotechnischen Aktuators aus einem Kraftfahrzeug mit den Merkmalen von Anspruch 1 bzw. 14 gelöst. Bevorzugte Ausgestaltungen der Erfindung ergeben sich aus den abhängigen Ansprüchen.

Ein wesentlicher Gedanke der Erfindung besteht darin, einen zusätzlichen Modus in einem Steuergerät eines pyrotechnischen Aktuators einzuführen, der ein gesichertes, kontrolliertes und protokolliertes Auslösen des Aktuators ermöglicht. Dieser zusätzliche Modus wird im Folgenden als Entsorgungsmodus bezeichnet, da ein kontrolliertes Auslösen in der Regel nur beim Entsorgen des Aktuators, d.h. wenn das Kraftfahrzeug verschrottet wird, erforderlich ist.

Die Erfindung betrifft nun ein Verfahren zum Entschärfen eines pyrotechnischen Aktuators aus einem Kraftfahrzeug, bei dem mittels einer Diagnoseeinheit ein Diagnosemodus eines Steuergeräts des pyrotechnischen Aktuators aktiviert wird. Erfindungsgemäss wird anschliessend ein Entsorgungsmodus des Steuergeräts aktiviert und der pyrotechnische Aktuator in diesem Modus gezündet. Erst durch Aktivieren des Entsorgungsmodus ist ein Zünden bzw. Auslösen des Aktuators möglich. Dadurch wird eine höhere Sicherheit als bei einer einfachen Eingabe eines Kodesignals erzielt.

Im Entsorgungsmodus empfängt vorzugsweise ein Masterkontroller im Steuergerät ein erstes Kodewort zum Zünden des pyrotechnischen Aktuators von der Diagnoseeinheit, das er an einen Slavekontroller überträgt, der zum Freigeben und Verriegeln eines Zündpfades des pyrotechnischen Aktuators vorgesehen ist. Da in moderne Steuergeräten für pyrotechnische Aktuatoren, wie sie beispielsweise in Airbagsystemen eingesetzt werden, keine Safing- oder Triggersignale zum Erreichen eines bestimmten Sicherheitslevels, sondern ein Master- und ein Slavekontroller eingesetzt werden, kann der Vorgang des kontrollierten Zündens durch die beiden Kontroller kontrolliert und überwacht werden.

Insbesondere fordert der Slavekontroller ein zweites Kodewort zum Zünden des pyrotechnischen Aktuators vom Masterkontroller an, das der Masterkontroller von der Diagnoseeinheit anfordert. Durch den Einsatz eines zweiten Kodeworts kann die Sicherheit im Entsorgungsmodus weiter erhöht werden.

Aus Sicherheitsgründen kann der Masterkontroller das zweite Kodewort von der Diagnoseeinheit nur während eines vorgegebenen Zeitraums anfordern.

Insbesondere wird der Entsorgungsmodus wieder deaktiviert, falls die Diagnoseeinheit nach Ablauf des vorgegebenen Zeitraums kein zweites Kodewort an den Masterkontroller überträgt.

Dann überprüft der Slavekontroller das erste und zweite Kodewort, insbesondere indem er beide Kodeworte miteinander verknüpft und das Ergebnis auf Plausibilität prüft. Dadurch kann verhindert werden, dass ein oder zwei ungültige Kodeworte eingegeben werden.

Der Slavekontroller kann dann bei erfolgreicher Überprüfung der beiden Kodeworte ein Freigabesignal an den Masterkontroller senden.

Der Masterkontroller kann wiederum das empfangene Freigabesignal an den Slavekontroller quittieren und den Zündpfad des pyrotechnischen Aktuators freigeben.

Insbesondere gibt der Slavekontroller nach Quittierung des Freigabesignals durch den Masterkontroller den Zündpfad des pyrotechnischen Aktuators frei.

Typischerweise überwacht der Masterkontroller Zündkreise zum Zünden des pyrotechnischen Aktuators auf eine ordnungsgemäße Zündung und protokolliert das Zünden pyrotechnischen Aktuators.

Danach kann ein den gezündeten pyrotechnischen Aktuator enthaltendes System, insbesondere ein Airbagsystem, verriegelt werden, so dass es nicht mehr einsetzbar ist.

Um den Entschärfungsvorgang zu protokollieren, kann beim Verriegeln des Systems ein Datum- und/oder Zeitstempel und/oder eine Identifikation, insbesondere Identifikationsnummer der Diagnoseeinheit im System gespeichert wird. Somit ist die Entschärfung des pyrotechnischen Aktuators später nachvollziehbar.

Vorzugsweise gibt die Diagnoseeinheit nach dem Verriegeln des Systems ein Protokoll aus, druckt es insbesondere auf beispielsweise einen in der Diagnoseeinheit eingebauten oder an diese angeschlossenen Drucker aus; das Protokoll weist eine Kraftfahrzeug-Seriennummer, ein System-Seriennummer und/oder einen Status des Systems mit dem pyrotechnischen Aktuators auf und dient vorzugsweise zur Archivierung und zum Nachweis des Entschärfungsvorgangs.

Ferner betrifft die Erfindung eine Vorrichtung zum Entschärfen eines pyrotechnischen Aktuators aus einem Kraftfahrzeug, gemäß Anspruch 14, insbesondere mit einem Steuergerät zum Ansteuern des pyrotechnischen Aktuators, und einer Diagnoseeinheit, die zum Aktivieren eines Diagnosemodus des Steuergeräts des pyrotechnischen Aktuators ausgebildet ist. Erfindungsgemäss weist das Steuergerät einen Entsorgungsmodus auf, der zum kontrollierten Zünden des pyrotechnischen Aktuators vorgesehen ist; die Diagnoseeinheit ist zum Aktivieren des Entsorgungsmodus des Steuergeräts des pyrotechnischen Aktuators ausgebildet.

Insbesondere sind das Steuergerät und die Diagnoseeinheit zum Durchführen des oben erläuterten Verfahrens gemäss der Erfindung ausgebildet.

Vorzugsweise sind Steuergerät und Diagnoseeinheit programmtechnisch zum Durchführen eines Verfahrens gemäss der Erfindung eingerichtet, insbesondere ist eine Software des Steuergeräts und der Diagnoseeinheit um den Entsorgungsmodus erweitert. In der Regel können bereits vorhandene Diagnoseeinheiten und Steuergeräte durch eine Aktualisierung ihrer Betriebssoftware erfindungsgemäß ausgebildet werden.

Weiterhin betrifft die Erfindung ein Airbagsystem mit einem pyrotechnischen Aktuator zum Aktivieren eines Airbags und einem Steuergerät zum Steuern des Airbagsystems, insbesondere zum Überwachen und Zünden des pyrotechnischen Aktuators gemäß Anspruch 15. Das Steuergerät weist einen Entsorgungsmodus zum kontrollierten Zünden des pyrotechnischen Aktuators auf, der durch eine Diagnoseeinheit aktivierbar und zum Durchführen des oben erläuterten Verfahrens gemäss der Erfindung ausgebildet ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: ein Ausführungsbeispiel einer Vorrichtung zum Entsorgen eines Airbagsystems gemäss der Erfindung, und in
- Fig. 2: ein Ausführungsbeispiel eines Verfahrens zum Entsorgen des in Fig. 1 gezeigten Airbagsystems gemäss der Erfindung.

Im Folgenden können funktional gleiche und/oder gleiche Elemente mit den gleichen Bezugsziffern bezeichnet sein.

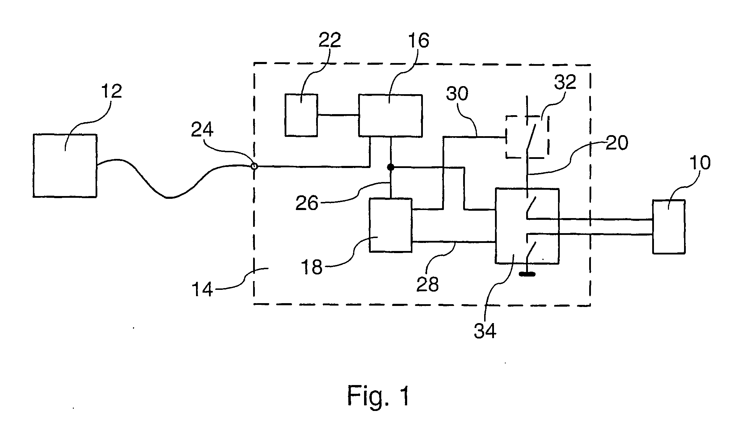

In Fig. 1 ist eine Zündpille 10 als pyrotechnischer Aktuator in einem Airbagsystem eingesetzt. Die Zündpille 10 wird durch ein Steuergerät 14 kontrolliert, das wiederum mit einer Diagnoseeinheit 12 zum Testen und Auslösen bzw. Zünden der Zündpille 10 kommunikationsmässig verbunden werden kann. Hierzu weist das Steuergerät 14 eine Diagnoseschnittstelle 24 auf, die beispielsweise eine bekannte OBD (On-Board Diagnostic)-Schnittstelle ist.

Das Steuergerät umfasst ferner einen Master-Mikroprozessor 16 (Masterkontroller) und einen Slave-Mikroprozessor 18 (Slavekontroller), die beide in an sich bekannter Weise im Steuergerät 14 zum Erzielen eines hohen Sicherheitslevels vorgesehen sind und dementsprechend zusammenarbeiten. Beide Prozessoren 16 und 18 sind über einen Datenbus 26 miteinander kommunikationsmässig verbunden. Der Master-Mikroprozessor 16 ist zudem mit der Diagnoseschnittstelle 24 verbunden, über die er mit der Diagnoseeinheit 12 kommunizieren kann, inbesondere von ihr Steuerbefehle empfangen und an sie Diagnosedaten ausgeben kann.

Der Slave-Mikroprozessor 18 dient im Wesentlichen zur Freigabe des Zündpfades 20 im Steuergerät 14. Im Zündpfad 20 befinden sich ein Schalter 32, der als Hauptschalter dient, und eine Treiberstufe 34, die zum Treiben der Zündpille 10, d.h. zum Schliessen des Zündpfades 20 dient. Der Zündpfad 20 verbindet eine nicht dargestellte Zündspannungsquelle mit der Zündpille 10. Wenn der Schalter 32 geschlossen und die Treiberstufe 34 aktiviert wird, ist der Zündpfad 20 geschlossen und die Zündpille 10 wird durch die anliegende Zündspannung gezündet. Der Schalter 32 wird von einem zweiten Aktivierungssignal 30 und die Treiberstufe 34 von einem ersten Aktivierungssignal 28 des Slave-Mikroprozessors 18 kontrolliert. Ferner wird die Treiberstufe 34 von Daten auf dem Datenbus 26 gesteuert, die vom Master-Mikroprozessor 16 bereit gestellt werden.

Im Normalbetrieb wird die Beschleunigung eines Kraftfahrzeugs, in dem das Airbagsystem eingebaut ist, über einen Beschleunigungssensor 22 im Steuergerät 14 gemessen. Wenn eine besonders grosse negative Beschleunigung gemessen wird, veranlasst der Master-Mikroprozessor 16 das Zünden bzw. Auslösen der Zündpille 10 und das Aktivieren des Airbags, sofern der Slave-Mikroprozessor 18 das erste und zweite Aktivierungssignal 28 bzw. 30 freigegeben hat. Die Freigabe der beiden Aktivierungssignale 28 und 30 erfolgt dann, wenn der Slave-Mikroprozssor 18 ein fehlerfreies Arbeiten des Master-Mikroprozessors 16 detektiert hat.

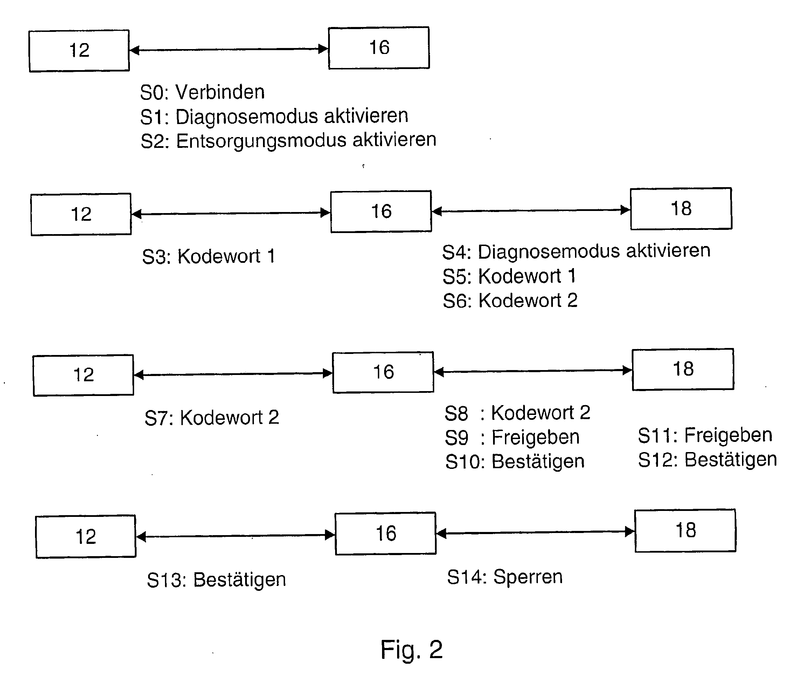

Zum Entsorgen des Airbagsystems ist es erforderlich, die Zündpille 10 kontrolliert zu zünden. Da kein Beschleunigungssignal von einem Beschleunigungssensor zur Verfügung steht, wird das Zünden von der Diagnoseeinheit 12 initiiert. Der Ablauf des Zündens mittels der Diagnoseeinheit 12 ist in Fig. 2 dargestellt, indem der Kommunikationsablauf zwischen der Diagnoseeinheit 12, dem Master-Mikroprozessor 16 und dem Slave-Mikroprozessor 18 erläutert und gezeigt wird.

In einem Schritt S0 wird die Diagnoseeinheit 12 mit dem Master-Mikroprozessor 16 verbunden, d.h. die Diagnoseeinheit initiiert eine Kommunikationsverbindung mit dem Master-Mikroprozessor 16.

Anschließend aktiviert die Diagnoseeinheit 12 einen Diagnosemodus im Steuergerät 14, genauer gesagt im Master-Mikroprozessor 16 (Schritt S1). Danach wird im Steuergerät 14 bzw. Master-Mikroprozessor 16 von der Diagnoseeinheit 12 ein Entsorgungsmodus aktiviert, in dem ein kontrolliertes Zünden und ein Sperren des Airbagsystems für eine weitere Benutzung möglich ist.

Im Entsorgungsmodus übermittelt die Diagnoseeinheit 12 ein erstes Kodewort in einem Schritt S3 an den Master-Mikroprozessor 16, das dieser angefordert hat. Das erste Kodewort kann ein dem Airbagsystem zugeordnetes eindeutiges Kodewort oder ein zentrales Kodewort sein. Es kann über eine Tastatur an der Diagnoseeinheit 12 eingegeben oder in dieser gespeichert sein.

Wenn das erste Kodewort vom Master-Mikroprozessor 16 überprüft ein freigegeben worden ist, aktiviert dieser den Entsorgungsmodus auch im Slave-Mikroprozessor 18 (Schritt S4). Daraufhin erfragt der Slave-Mikroprozessor 18 das erste Kodewort vom Master-Mikroprozessor 16, das dieser an den Slave-Mikroprozessor 18 übermittelt (Schritt S5).

Wenn das erste Kodewort vom Slave-Mikroprozessor 18 verifiziert worden ist, erfragt dieser vom Master-Mikroprozessor 16 ein zweites Kodewort (Schritt S6). Der Master-Mikroprozessor 16 fordert das zweite Kodewort dann vom der Diagnoseeinheit 12 an (Schritt S7). Nachdem das zweite Kodewort von der Diagnoseeinheit 12 an den Master-Mikroprozessor 18 übermittelt und von diesem überprüft worden ist, sendet er in einem Schritt S8 das zweite Kodewort an den Slave-Mikroprozessor 18.

Der Slave-Mikroprozessor 18 überprüft daraufhin das erste und zweite Kodewort, indem er beispielsweise beide Kodewörter logisch verknüpft und das Ergebnis auf Plausibilität prüft. Ergibt die Überprüfung, dass beide Kodeworte korrekt sind, gibt der Slave-Mikroprozessor 18 das Zünden frei (Schritt S9). Der Master-Mikroprozessor 16 bestätigt die Freigabe (Schritt S10) und gibt wiederum den Zündpfad frei. Daraufhin gibt auch der Slave-Mikroprozessor 18 den Zündpfad frei (Schritt S11) und quittiert die Freigabe an den Master-Mikroprozessor 16 (Schritt S12) . Der Master-Mikroprozessor 16 zündet daraufhin die Zündpille 10 und überwacht sowie protokolliert das Zünden und die Zündkreise auf eine ordnungsgemäße Zündung. Die erfolgreiche Zündung wird vom Master-Mikroprozessor 16 an die Diagnoseeinheit 12 bestätigt (Schritt S13) . Anschließend sperrt der Master-Mikroprozessor 16 das Airbagsystem (Schritt S14).

Das oben erläuterte Verfahren bietet ein Höchstmass an Sicherheit und arbeitet mit Standard-Diagnoseeinheiten. Für die Implementierung der Erfindung ist es im einfachsten Fall lediglich erforderlich, die Betriebssoftware der Diagnoseeinheit und des Airbagsystems anzupassen, insbesondere um den Entsorgungsmodus zu ergänzen.

Nach dem Zünden kann ein Sicherheitssystem mit der Zündpille wie ein Airbagsystem völlig gefahrlos ausgebaut werden.

### Bezugszeichen

- 10: Zündpille (pyrotechnischer Aktuator)
- 12: Diagnoseeinheit
- 14: Airbag-Steuergerät
- 16: Master-Mikroprozessor
- 18: Slave-Mikroprozessor
- 20: Zündpfad
- 22: Beschleunigungssensor
- 24: Diagnoseschnittstelle
- 26: Datenbus
- 28: erstes Aktivierungssignal
- 30: zweites Aktivierungssignal
- 32: Zündpfadschalter
- 34: Treiberstufe
- S1-S14: Verfahrensschritte

## Patentansprüche

1. Verfahren zum Entschärfen eines pyrotechnischen Aktuators (10) aus einem Kraftfahrzeug, bei dem mittels einer Diagnoseeinheit (12) ein Diagnosemodus eines Steuergeräts (14) des pyrotechnischen Aktuators (10) aktiviert wird (S0, S1),
**dadurch gekennzeichnet, dass**
anschliessend ein Entsorgungsmodus des Steuergeräts (14) aktiviert (S2) und der pyrotechnische Aktuator (10) in diesem Modus gezündet wird.

2. Verfahren nach Anspruch 1,
**dadurch gekennzeichnet, dass**
im Entsorgungsmodus ein Masterkontroller (16) im Steuergerät (14) ein erstes Kodewort zum Zünden des pyrotechnischen Aktuators (10) von der Diagnoseeinheit (12) empfängt (S3), das er an einen Slavekontroller (18) überträgt (S5), der zum Freigeben und Verriegeln eines Zündpfades (20) des pyrotechnischen Aktuators (10) vorgesehen ist (S1).

3. Verfahren nach Anspruch 2,
**dadurch gekennzeichnet, dass**
der Slavekontroller (18) ein zweites Kodewort zum Zünden des pyrotechnischen Aktuators (10) vom Masterkontroller (16) anfordert (S6), das der Masterkontroller (16) von der Diagnoseeinheit (12) anfordert (S6).

4. Verfahren nach Anspruch 3,
**dadurch gekennzeichnet, dass**
der Masterkontroller (16) das zweite Kodewort von der Diagnoseeinheit (12) während eines vorgegebenen Zeitraums anfordert.

5. Verfahren nach Anspruch 4,
**dadurch gekennzeichnet, dass**
der Entsorgungsmodus deaktiviert wird, falls die Diagnoseeinheit (12) nach Ablauf des vorgegebenen Zeitraums kein zweites Kodewort an den Masterkontroller überträgt.

6. Verfahren nach Anspruch 3, 4 oder 5,
**dadurch gekennzeichnet, dass**
der Slavekontroller (18) das erste und zweite Kodewort überprüft, insbesondere beide Kodeworte miteinander verknüpft und das Ergebnis auf Plausibilität prüft.

7. Verfahren nach Anspruch 6,
**dadurch gekennzeichnet, dass**
der Slavekontroller (18) bei erfolgreicher Überprüfung der beiden Kodeworte ein Freigabesignal an den Maserkontroller (16) sendet (S9) .

8. Verfahren nach Anspruch 7,
**dadurch gekennzeichnet, dass**
der Masterkontroller (16) das empfangene Freigabesignal an den Slavekontroller (18) quittiert und den Zündpfad (20) des pyrotechnischen Aktuators (10) freigibt (S10).

9. Verfahren nach Anspruch 8,
**dadurch gekennzeichnet, dass**
der Slavekontroller (18) nach Quittierung des Freigabesignals durch den Masterkontroller (16) den Zündpfad (20) des pyrotechnischen Aktuators (10) freigibt (S11).

10. Verfahren nach Anspruch 9,
**dadurch gekennzeichnet, dass**
der Masterkontroller (16) Zündkreise zum Zünden des pyrotechnischen Aktuators (10) auf eine ordnungsgemässe Zündung überwacht und das Zünden pyrotechnischen Aktuators (10) protokolliert.

11. Verfahren nach Anspruch 10,
**dadurch gekennzeichnet, dass**
ein den gezündeten pyrotechnischen Aktuator (10) enthaltendes System, insbesondere ein Airbagsystem, verriegelt wird (S14).

12. Verfahren nach Anspruch 11,
**dadurch gekennzeichnet, dass**
beim Verriegeln des Systems ein Datum- und/oder Zeitstempel und/oder eine Identifikation, insbesondere Identifikationsnummer der Diagnoseeinheit (12) im System gespeichert wird.

13. Verfahren nach Anspruch 11 oder 12,
**dadurch gekennzeichnet, dass**
die Diagnoseeinheit (12) nach dem Verriegeln des Systems ein Protokoll ausgibt, insbesondere ausdruckt, das eine Kraftfahrzeug-Seriennummer, ein System-Seriennummer und/oder einen Status des Systems mit dem pyrotechnischen Aktuator aufweist.

14. Vorrichtung zum Entschärfen eines pyrotechnischen Aktuators (10) aus einem Kraftfahrzeug, mit
einem Steuergerät (14) zum Ansteuern des pyrotechnischen Aktuators (10), und
einer Diagnoseeinheit (12), die zum Aktivieren eines Diagnosemodus des Steuergeräts (14) des pyrotechnischen Aktuators (10) ausgebildet ist,
**dadurch gekennzeichnet, dass**
das Steuergerät (14) einen Entsorgungsmodus aufweist, der zum kontrollierten Zünden des pyrotechnischen Aktuators (10) vorgesehen ist, und
die Diagnoseeinheit (12) zum Aktivieren des Entsorgungsmodus des Steuergeräts (14) des pyrotechnischen Aktuators (10) ausgebildet ist, wobei das Steuergerät derart ausgebildet ist, dass nach dem Diagnosemodus der Entsorgungsmodus aktiviert wird.

15. Airbagsystem mit
einem pyrotechnischen Aktuator (10) zum Aktivieren eines Airbags und
einem Steuergerät (14) zum Steuern des Airbagsystems, insbesondere zum Überwachen und Zünden des pyrotechnischen Aktuators (10),
**dadurch gekennzeichnet, dass**
das Steuergerät (14) einen Entsorgungsmodus zum kontrollierten Zünden des pyrotechnischen Aktuators (10) aufweist, der durch eine Diagnoseeinheit (12) aktivierbar und das Steuergerät derart ausgebildet ist, dass nach dem Diagnosemodus der Entsorgungsmodus aktiviert wird.

## Claims

1. A procedure for deactivating a pyrotechnic actuator (10) in a motor vehicle, in which a diagnostics unit (12) is used to activate (S0, S1) a diagnostics mode of a control device (14) of the pyrotechnic actuator (10),
**characterized in that**
subsequently, a disposal mode of the control device (14) is activated (S2) and the pyrotechnic actuator (10) is fired in this mode.

2. A procedure according to claim 1,
**characterized in that**
in disposal mode, a master controller (16) in the control device (14) receives (S3) an initial codeword for firing the pyrotechnic actuator (10) from the diagnostics unit (12), which it transmits (S5) to a slave controller (18) which is provided (S1) in order to release and unlock a firing path (20) of the pyrotechnic actuator (10).

3. A procedure according to claim 2,
**characterized in that**
the slave controller (18) requests (S6) a second codeword for firing the pyrotechnic actuator (10) from the master controller (16), which the master controller (16) requests (S6) from the diagnostics unit (12).

4. A procedure according to claim 3,
**characterized in that**
the master controller (16) requests the second codeword from the diagnostics unit (12) during a specified time frame.

5. A procedure according to claim 4
**characterized in that**
the disposal mode is deactivated if the diagnostics unit (12) does not transmit a second codeword to the master controller after the specified time frame has expired.

6. A procedure according to any one of claims 3, 4 or 5
**characterized in that**
the slave controller (18) examines the first and second codeword, in particular, links both codewords with each other, and checks the result for plausibility.

7. A procedure according to claim 6
**characterized in that**
the slave controller transmits (S9) a release signal to the master controller (16) when the two codewords have been examined and passed.

8. A procedure according to claim 7
**characterized in that**
the master controller (16) sends an acknowledgement of the release signal received to the slave controller (18) and releases (S10) the firing path (20) of the pyrotechnic actuator (10).

9. A procedure according to claim 8
**characterized in that**
the slave controller (18), after the release signal is acknowledged by the master controller (16) releases (S11) the firing path (20) of the pyrotechnic actuator (10).

10. A procedure according to claim 9
**characterized in that**
the master controller (16) monitors firing circuits for firing the pyrotechnic actuator (10) for correct firing, and logs the firing of the pyrotechnic actuator (10).

11. A procedure according to claim 10
**characterized in that**
a system which includes the fired pyrotechnic actuator (10), in particular an airbag system, is locked (S14).

12. A procedure according to claim 11
**characterized in that**
when the system is locked, a date and/or time stamp and/or an identification, in particular the identification number of the diagnostics unit (12) is stored in the system.

13. A procedure according to either of claims 11 or 12
**characterized in that**
the diagnostics unit (12) issues, in particular, prints a protocol after the system is locked, which comprises a vehicle serial number, a system serial number and/or a status of the system with the pyrotechnic actuator.

14. A facility for deactivating a pyrotechnic actuator (10) in a vehicle, with a control device (14) for triggering the pyrotechnic actuator (10) and
a diagnostics unit (12) which is designed to activate a diagnostics mode on the control device (14) of the pyrotechnic actuator (10)
**characterized in that**
the control device (14) comprises a disposal mode, which is provided in order to fire the pyrotechnic actuator (10) in a controlled manner, and
the diagnostics unit (12) which is designed for activating the disposal mode of the control device (14) of the pyrotechnic actuator (10), whereby the control device is designed in such a manner that after the diagnostics mode, the disposal mode is activated.

15. An airbag system with
a pyrotechnic actuator (10) for activating an airbag, and
a control device (14) for controlling the airbag system, in particular for monitoring and firing the pyrotechnic actuator (10)
**characterized in that**
the control device (14) comprises a disposal mode for the controlled firing of the pyrotechnic actuator (10), which can be activated via a diagnostics unit (12), and the control device is designed in such a manner that after the diagnostics mode, the disposal mode is activated.

## Revendications

1. Procédé de neutralisation d'un actionneur pyrotechnique (10) provenant d'un véhicule automobile, dans lequel, au moyen d'une unité de diagnostic (12), un mode diagnostic d'un appareil de commande (14) de l'actionneur pyrotechnique (10) est activé (S0, S1),
**caractérisé en ce que**
un mode élimination de l'appareil de commande (14) est ensuite activé (S2) et l'actionneur pyrotechnique (10) est amorcé dans ce mode.

2. Procédé selon la revendication 1,
**caractérisé en ce que**,
dans le mode élimination, un contrôleur maître (16) dans l'appareil de commande (14) reçoit (S3) de l'unité de diagnostic (12) un premier mot de code pour l'amorçage de l'actionneur pyrotechnique (10) et transmet (S5) ce mot à un contrôleur esclave (18) qui est prévu (S1) pour le déblocage et le verrouillage d'un chemin d'amorçage (20) de l'actionneur pyrotechnique (10).

3. Procédé selon la revendication 2,
**caractérisé en ce que**
le contrôleur esclave (18) demande (S6) au contrôleur maître (16) un deuxième mot de code pour l'amorçage de l'actionneur pyrotechnique (10), mot que le contrôleur maître (16) demande (S6) à l'unité de diagnostic (12).

4. Procédé selon la revendication 3,
**caractérisé en ce que**
le contrôleur maître (16) demande à l'unité de diagnostic (12) le deuxième mot de code pendant une période de temps prédéfinie.

5. Procédé selon la revendication 4,
**caractérisé en ce que**
le mode élimination est désactivé au cas où l'unité de diagnostic (12), à l'expiration de la période de temps prédéfinie, ne transmet pas de deuxième mot de code au contrôleur maître.

6. Procédé selon la revendication 3, 4 ou 5,
**caractérisé en ce que**
le contrôleur esclave (18) vérifie le premier et le deuxième mot de code, en particulier relie l'un à l'autre les deux mots de code et contrôle la vraisemblance du résultat.

7. Procédé selon la revendication 6,
**caractérisé en ce que**
le contrôleur esclave (18), après la vérification positive des deux mots de code, envoie (S9) un signal de déblocage au contrôleur maître (16).

8. Procédé selon la revendication 7,
**caractérisé en ce que**
le contrôleur maître (16) acquitte auprès du contrôleur esclave (18) le signal de déblocage reçu et débloque (S10) le chemin d'amorçage (20) de l'actionneur pyrotechnique (10).

9. Procédé selon la revendication 8,
**caractérisé en ce que**
le contrôleur esclave (18), après l'acquittement du signal de déblocage par le contrôleur maître (16), débloque (S11) le chemin d'amorçage (20) de l'actionneur pyrotechnique (10).

10. Procédé selon la revendication 9,
**caractérisé en ce que**
le contrôleur maître (16) surveille des circuits d'amorçage pour l'amorçage de l'actionneur pyrotechnique (10) pour vérifier la conformité de l'amorçage et dresse le procès-verbal de l'amorçage de l'actionneur pyrotechnique (10).

11. Procédé selon la revendication 10,
**caractérisé en ce que**
un système contenant l'actionneur pyrotechnique (10) amorcé, en particulier un système d'airbag, est verrouillé (S14).

12. Procédé selon la revendication 11,
**caractérisé en ce que**,
lors du verrouillage du système, un timbre de date et/ou d'heure et/ou une identification, en particulier un numéro d'identification de l'unité de diagnostic (12), est enregistré(e) dans le système.

13. Procédé selon la revendication 11 ou 12,
**caractérisé en ce que**
l'unité de diagnostic (12), après le verrouillage du système, délivre, en particulier imprime, un procès-verbal, qui présente un numéro de série de véhicule automobile, un numéro de série de système et/ou un statut du système avec l'actionneur pyrotechnique.

14. Procédé de neutralisation d'un actionneur pyrotechnique (10) en provenance d'un véhicule automobile, avec un appareil de commande (14) pour le pilotage de l'actionneur pyrotechnique (10), et
une unité de diagnostic (12) qui est constituée pour l'activation d'un mode de diagnostic de l'appareil de commande (14) de l'actionneur pyrotechnique (10),
**caractérisé en ce que**
l'appareil de commande (14) présente un mode élimination qui est prévu pour l'amorçage contrôlé de l'actionneur pyrotechnique (10), et
l'unité de diagnostic (12) est constituée pour l'activation du mode élimination de l'appareil de commande (14) de l'actionneur pyrotechnique (10), l'appareil de commande étant constitué de telle sorte que, après le mode de diagnostic, le mode élimination est activé.

15. Système d'airbag avec
un actionneur pyrotechnique (10) pour l'activation d'un airbag et
un appareil de commande (14) pour la commande du système d'airbag, en particulier pour la surveillance et l'amorçage de l'actionneur pyrotechnique (10),
**caractérisé en ce que**
l'appareil de commande (14) présente un mode élimination pour l'amorçage contrôlé de l'actionneur pyrotechnique (10) activable par une unité de diagnostic (12) et **en ce que** l'appareil de commande est constitué de sorte que, après le mode de diagnostic, le mode élimination est activé.
